(19)

Europäisches
Patentamt
European
Patent Office
Office européen
des brevets

(11) **EP 4 763 582 A1**

(12) **EUROPEAN PATENT APPLICATION**

(43) Date of publication:
24.06.2026 Bulletin 2026/26

(21) Application number: 24222292.5

(22) Date of filing: 20.12.2024

(51) International Patent Classification (IPC):
**B60L 15/20** (2006.01)    **B60L 50/60** (2019.01)
**B60L 53/37** (2019.01)    **B60W 40/13** (2012.01)

(52) Cooperative Patent Classification (CPC):
**B60L 50/60; B60L 15/2009; B60L 15/2018;**
**B60L 53/37; B60W 30/188;** B60L 2240/16;
B60L 2240/423; B60L 2240/642; B60L 2240/645;
B60L 2240/647; B60L 2260/32; B60W 2530/10;
B60W 2530/16; B60W 2552/15; B60W 2552/20;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Autonomous Solutions AB**
**405 08 Göteborg (SE)**

(72) Inventors:
• **SJÖBERG, Johan**
**722 19 VÄSTERÅS (SE)**
• **LJUNGQVIST, Oskar**
**473 96 HENÅN (SE)**

(74) Representative: **Kransell & Wennborg KB**
**P.O. Box 2096**
**403 12 Göteborg (SE)**

(54) **COMPUTER SYSTEM AND METHOD FOR CONTROLLING A VEHICLE**

(57)    The present disclosure relates to a computer system for a vehicle, wherein the computer system comprises processing circuitry configured to: determine a target acceleration for the vehicle; determine a ground surface profile for a ground surface that is longitudinally ahead of the vehicle, the ground surface profile being indicative of an aggregated force acting on the vehicle; estimate a rolling resistance for the vehicle using a vehicle model; and determine a control parameter for an electric drive unit of the vehicle to longitudinally position the vehicle along the ground surface, wherein the control command is determined based on the combination of the determined target acceleration, the ground surface profile and the estimated rolling resistance.

Fig. 1

EP 4 763 582 A1

(Cont. next page)

(52) Cooperative Patent Classification (CPC): (Cont.)
B60W 2556/50; B60W 2710/083; B60W 2720/106

## Description

### TECHNICAL FIELD

The disclosure relates generally to the field of controlling an electric vehicle, such as an electric heavy-duty vehicle operating in a confined area. In particular aspects, the disclosure relates to a computer system for an electric vehicle, an electric vehicle and methods for controlling such electric vehicle. The disclosure can be applied to electric heavy-duty vehicles, such as trucks, buses, and construction equipment, among other vehicle types. In particular, the disclosure can be applied to autonomous electric vehicles, such as unmanned autonomous electric vehicles. Although the disclosure may be described with respect to a particular vehicle, the disclosure is not restricted to any particular vehicle.

### BACKGROUND

Autonomous electric vehicles have witnessed widespread adoption in various industries, transforming efficiency and safety in tasks such as material transport and handling in confined geographical areas. For example, these vehicles are extensively used in the transportation of bulk material from loading zones to unloading zones. Their ability to operate without human intervention has significantly improved operational workflows and reduced the risk of accidents in such environments.

With the advancement of autonomous vehicle technology, the need for precise vehicle positioning has become increasingly important in various applications. In the realm of electric vehicles (EVs), precise stopping may be necessary for aligning the vehicle with charging infrastructure to ensure a proper electrical connection. Misalignment can lead to inefficient charging, increased wear on connectors, or the inability to charge altogether. Automated systems that govern vehicle movement must achieve high longitudinal precision to ensure a seamless charging process.

Similarly, in the operation of heavy-duty vehicles, such as those used in construction, mining, or logistics, precise longitudinal positioning may be crucial for efficient loading and unloading of materials. For instance, in mining operations, vehicles must position themselves accurately to receive material from loaders or to dump material at specific locations to optimize workflow and prevent spillage or operational inefficiencies.

Thus, there is a continuing need for further improvements in vehicle control and motion management of heavy-duty vehicles, including electric vehicles operating in confined spaces.

### SUMMARY

According to a first aspect of the disclosure, there is provided a computer system for a vehicle. The computer system comprises processing circuitry configured to: determine a target acceleration for the vehicle; determine a ground surface profile for a ground surface that is longitudinally ahead of the vehicle, the ground surface profile being indicative of an aggregated force acting on the vehicle; estimate a rolling resistance for the vehicle using a vehicle model; and determine a control parameter for an electric drive unit of the vehicle to longitudinally position the vehicle along the ground surface, wherein the control parameter is determined based on the combination of the determined target acceleration, the ground surface profile, and the estimated rolling resistance.

The disclosure is at least partly based on the insight that operating an electric vehicle near a dumping location, a charging interface and other locations and events, such as during an automatic parking of the vehicle, can lead to challenges in terms of precise positioning. In such situations, achieving high longitudinal precision may thus be necessary when controlling the vehicle. However, factors such as uneven ground surfaces, ramps, or other terrain variations can often affect the ability of the vehicle to control its speed and position accurately, creating challenges in achieving the desired level of precision.

The first aspect of the disclosure may seek to improve the longitudinal positioning of an electric vehicle, particularly in relation to accurate placement at load or dump spots. More specifically, the disclosure may seek to improve the longitudinal positioning of an electric autonomous vehicle by providing a control system that adapts dynamically to the ground surface characteristics and vehicle-specific parameters.

A technical benefit may include providing enhanced adaptability and control precision in the longitudinal positioning of an electric vehicles, such as an electric autonomous vehicle. By incorporating a ground surface profile, estimated rolling resistance, and vehicle-specific models, the system ensures better synchronization between the desired and actual longitudinal positions of the vehicle. Additional benefits include improved energy efficiency, responsiveness, and overall reliability.

Typically, the ground surface profile represents or is used to calculate an aggregated force acting on the vehicle.

Optionally in some examples, including in at least one preferred example, the aggregated force acting on the vehicle may be calculated as a combination of forces acting on respective wheels of the vehicle based on localized ground surface characteristics. A technical benefit may include enhanced precision in determining the control parameter by accounting for localized variations in the ground surface. By accounting for localized variations in the ground surface, a more precise understanding and determination of the forces acting on the vehicle can be achieved. The improved accuracy facilitates anticipatory (feedforward) control adjustments, potentially enhancing vehicle stability and handling compared to reactive (feedback) control strategies.

Optionally in some examples, including in at least one preferred example, the ground surface profile may be determined using a forward-looking sensor system arranged on the vehicle. A technical benefit may include improved real-time detection of surface variations, ensuring timely adjustments to the control parameter. Moreover, such configuration may provide an even better estimate of the ground surface, leading to an even more precise localization of the vehicle.

Optionally in some examples, including in at least one preferred example, the vehicle model may comprise data indicative of a total weight of the vehicle, a rolling resistance coefficient, a radius of one or more wheels, and a target vehicle speed. A technical benefit may include enhanced modeling of the vehicle dynamics, leading to more precise control parameters. The rolling resistance coefficient may be a predetermined rolling resistance coefficient.

Optionally in some examples, including in at least one preferred example, the ground surface profile may be determined from data obtained from any one of another vehicle and a remote-control system. A technical benefit may include increased accuracy in surface profile prediction by leveraging external data sources. Such configuration may also increase the accuracy of surface profile prediction, e.g. compensate for occlusions or limitations in the vehicle's sensor field of view by providing information beyond its direct perception range.

Optionally in some examples, including in at least one preferred example, the processing circuitry may be configured to determine the control parameter in response to a need for high-precision longitudinal positioning of the vehicle. A technical benefit may include dedicated control based on scenarios requiring high-precision longitudinal positioning.

Optionally in some examples, including in at least one preferred example, the processing circuitry may be configured to determine the need for high-precision longitudinal positioning of the vehicle from data indicative of a need for a high-precision longitudinal positioning of the vehicle. A technical benefit may include enhanced decision-making capabilities by the controller, ensuring that high-precision positioning may only be engaged, when necessary, thus further improving the performance and energy efficiency.

Optionally in some examples, including in at least one preferred example, the data may be based on any one of a driver request, an automatically detected driving condition, and an automatically detected external situation requiring high-precision longitudinal positioning of the vehicle. A technical benefit may include improved adaptability to varying operational requirements.

Optionally in some examples, including in at least one preferred example, the data may be based on a fleet coordination system request requiring high-precision longitudinal positioning of the vehicle at a given geographical location. A technical benefit may include increased integration with fleet management systems for coordinated operations.

Optionally in some examples, including in at least one preferred example, the processing circuitry may be configured to determine a need for high-precision longitudinal positioning of the vehicle along a route based on any one of topography data and vehicle data. A technical benefit may include the ability to proactively adjust the powertrain system based on upcoming terrain or vehicle conditions, leading to a more efficient and controlled driving experience.

Optionally in some examples, including in at least one preferred example, high-precision longitudinal positioning may be a longitudinal positioning of the vehicle in which the vehicle moves in the longitudinal direction of the vehicle by a positional tolerance being within a predefined narrow range compared to a broader range for normal precision. A technical benefit may include the ability to achieve an even more accurate positioning of the vehicle, which may be relevant for applications such as automated parking, docking, or navigating tight spaces.

Optionally in some examples, including in at least one preferred example, the processing circuitry may be configured to control longitudinally positioning of the vehicle along the ground surface based on the determined control parameter.

Optionally in some examples, including in at least one preferred example, the processing circuitry may comprise controlling at least one electric drive units. Optionally in some examples, including in at least one preferred example, the processing circuitry may comprise controlling at least one electric drive units to provide a braking torque.

Optionally in some examples, including in at least one preferred example, the processing circuitry may be configured to implement a predictive control schema, wherein the control parameter is adjusted proactively to maintain the desired target acceleration of the vehicle. A technical benefit may include improved responsiveness to upcoming changes, ensuring smoother vehicle operations.

Optionally in some examples, including in at least one preferred example, the control parameter may be used in a feedback control profile for controlling the vehicle, wherein the processing circuitry is configured to receive data indicative of a deviation between an actual longitudinal position of the vehicle and a desired longitudinal position of the vehicle, and adjust the control parameter in response to the deviation to move the vehicle to the desired longitudinal position.

Optionally in some examples, including in at least one preferred example, the control parameter may be used in a feedforward control approach, wherein the processing circuitry is configured to anticipate changes in the aggregated force acting on the vehicle from the ground surface profile, and adjust the control parameter proactively to maintain the desired target acceleration of the vehicle.

According to a second aspect of the disclosure, there is provided a vehicle comprising the computer system according to the first aspect. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle may be an electric vehicle comprising at least one electric drive unit.

Optionally in some examples, including in at least one preferred example, the vehicle may be an autonomous electric vehicle. A technical benefit may include the integration of the powertrain system into autonomous vehicles, allowing for precise and reliable control of vehicle movements, which is relevant for safe and efficient autonomous driving.

According to a third aspect of the disclosure, there is provided a computer-implemented method for controlling a vehicle, wherein the method comprises determining, by processing circuitry of a computer system, a target acceleration for the vehicle; determining, by the processing circuitry, a ground surface profile for a ground surface that is longitudinally ahead of the vehicle, the ground surface profile being indicative of an aggregated force acting on the vehicle; estimating, by the processing circuitry, a rolling resistance for the vehicle using a vehicle model; and determining, by the processing circuitry, a control parameter for an electric drive unit of the vehicle so as to longitudinally position the vehicle along the ground surface, wherein the control command is determined based on the combination of the determined target acceleration, the ground surface profile, and the estimated rolling resistance.

The third aspect of the disclosure may seek to solve the same problem(s) as described for the first to second aspects of the disclosure. Thus, effects and features of the third aspect of the disclosure are largely analogous to those described above in connection with the first and second aspects of the disclosure.

According to a fifth aspect of the disclosure, there is provided a computer program product comprising program code for performing, when executed by the processing circuitry, the method of the fourth aspect.

According to a fifth aspect of the disclosure, there is provided a non-transitory computer-readable storage medium comprising instructions, which when executed by the processing circuitry, cause the processing circuitry to perform the method of the fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

## BRIEF DESCRIPTION OF THE DRAWINGS

Examples are described in more detail below with reference to the appended drawings.

FIG. 1 illustrates an exemplary view of a vehicle comprising a powertrain system having a controller configured to control positioning of the vehicle in a longitudinal direction the vehicle according to an example.

FIG. 2 illustrates an overview of a powertrain system of the vehicle in Fig. 1 according to examples.

FIG. 3 illustrates an example of controlling a vehicle, such as the vehicle of FIGS. 1 and 2 towards a dumping location, according to the examples.

FIG. 4 illustrates another example of controlling a vehicle, such as the vehicle of FIGS. 1 to 3, uphill and towards the dumping location, according to the examples.

FIG. 5 illustrates another example of controlling a vehicle, such as the vehicle of FIGS. 1 to 3, uphill and towards the dumping location, according to the examples.

FIG. 6 is a flow chart of an exemplary method to control a vehicle according to an example.

FIG. 7 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The present disclosure is at least partly based on the insight that operating an electric vehicle near a dumping location, a charging interface and other locations and events, such as during an automatic parking of the vehicle, can lead to challenges in terms of precise positioning. In such situations, achieving high longitudinal precision may thus be necessary when controlling the vehicle. However, factors such as uneven ground surfaces, ramps, or other terrain variations can often affect the ability of the vehicle to control its speed and position accurately, creating challenges in achieving the desired level of precision.

To remedy this, the present disclosure provides a computer system, a powertrain system, a vehicle including the computer system, and methods for controlling the vehicle, such as in a confined geographical area.

Thus, the disclosure seeks to improve the longitudinal positioning of an electric vehicle, particularly in relation to accurate placement at load or dump spots. More specifically, the disclosure may seek to improve the longitudinal positioning of an electric autonomous vehicle by providing a control system that adapts dynamically to the ground surface characteristics and vehicle-specific parameters.

A technical benefit includes providing enhanced adaptability and control precision in the longitudinal positioning of an electric autonomous vehicle. By incorporating a ground surface profile, estimated rolling resistance, and vehicle-specific models, the system ensures better synchronization between the desired and actual longitudinal positions of the vehicle. Additional benefits include improved energy efficiency, responsiveness, and overall reliability.

To this end, the proposed powertrain system allows for improving the control of the vehicle, such as an electric vehicle, e.g. an autonomous electric vehicle, in a confined geographical area requiring high-precision positioning of the vehicle in the longitudinal direction.

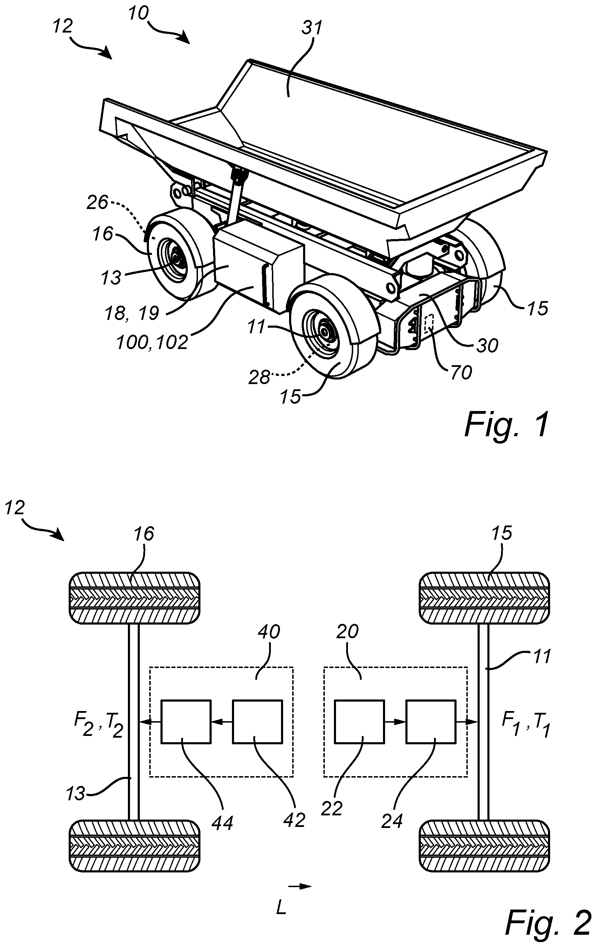

Examples of such computer systems, powertrain systems, vehicles and methods will now be described in relation to FIG. 1, in combination with FIGS. 2 to 7.

In FIG. 1, there is illustrated one example of a vehicle 10. In this example, the vehicle is an electric vehicle 10. The vehicle 10 is here also an autonomous vehicle. Hence, the vehicle is an autonomous electric vehicle 10. The vehicle 10 may likewise be operated by a driver. For ease of reference, the autonomous electric vehicle will be referred to as the vehicle 10.

The vehicle 10 of FIG. 1 is a load carrying vehicle in the form of a hauler. The load carrying vehicle 10 comprises a chassis 30 and a load carrying container 31 connected to the chassis 30. The chassis 30 is configured to support the load carrying container 31. The load carrying container 31 is configured to carry materials, such as mining shovel or the like. While the vehicle 10 in FIG. 1 is illustrated as a load carrying vehicle, the vehicle 10 may be of any type of vehicle suitable for transporting people and/or goods, such as bulk material from one location to another. For example, the vehicle may be a heavy-duty vehicle, such as a truck, excavator, loader, articulated hauler, dump truck, or any other suitable vehicle known in the art.

The vehicle 10 may be driven by any one of an operator, a computer system 100, a remote-control center in communication with the computer system 100. In some examples, the vehicle 10 is driven by a combination of the driver, the computer system 100 and the remote-control server, as is commonly known in the art. In some examples, when the vehicle 10 is an autonomous vehicle, the vehicle can also be controlled by a vehicle motion management (VMM) unit arranged in the vehicle, which is configured to individually control vehicle units, vehicle axles and/or wheels of the vehicle 10.

As illustrated in FIG. 1, the vehicle 10 comprises a powertrain system 12. The powertrain system 12 is configured to provide traction power for the vehicle 10. The traction power is delivered to one or more ground engaging members, e.g. one or more wheels 15, 16 of the vehicle 10.

The powertrain system 12 is here an electric powertrain system. As such, in FIG. 1, the powertrain system 12 is an electric powertrain system and the vehicle 10 is a fully electrical vehicle. The electric powertrain system 12 here comprises a battery system 18 and a fuel cell system 19. Moreover, as illustrated in FIG. 2, the electric powertrain system 12 comprises at least one electric machine 22, 42. The electric machine is configured to function as propulsion unit. Typically, as illustrated in FIG. 2, the electric powertrain system 12 comprises a plurality of electric machines 22, 42, each one of them being configured to function as a propulsion unit. Each one of the electric machines 22, 42 is an energy converting unit configured to generate a torque.

Each one of the electric machines 22, 42 is powered by at least one battery system 18, and/or by the fuel cell system 19. The battery system 18 comprises one or more battery packs having multiple battery cells. Analogously, the fuel cell system 19 may comprise one or more fuel cell stacks having multiple fuel cells. It should be noted that the electric powertrain system 12 may include one battery system for each electric machine or a common battery system for the set of electric machines 22, 42. Analogously, the electric powertrain system 12 may include one fuel cell system for each electric machine or a common fuel cell system for the set of electric machines. In some examples, the electric powertrain system 12 only comprises the battery system 18. In other examples, the electric powertrain system 12 only comprises the fuel cell system 19. In yet other examples, the electric powertrain system 12 comprises a combination of a battery system 18 and a fuel cell system 19. In one example, the electric powertrain system 12 a plurality of battery systems 18. In another example, the electric powertrain system 12 comprises the fuel cell system 19 as the primary energy source in combination with one or more supporting battery systems 18. Accordingly, the electric powertrain system 12 may comprise any one of a battery system 18 and a fuel cell system 19. The configuration of the battery system 18 and the fuel cell system 19 in the electric powertrain system 12 can be provided in several different ways, as is commonly known in the art. For ease of reference, the electric powertrain system will herein be referred to as the powertrain system 12.

To sum up, the powertrain system 12 in FIGS. 1 and 2 here comprises a plurality of propulsion units and power sources in the form of the electric machines 20, 40, the battery system 18 and the fuel cell system 19. To this end, traction power is delivered to the wheels, such as the pair of wheels 15, 16, by any one of the battery system 18 and the fuel cell system 19 in cooperation with one or more electric machines 22, 42. It should be noted that the vehicle 10 may in some configurations also include a supporting internal combustion.

The electric machines 22, 42 are here integral parts of a set of electric drive units 20, 40, respectively, as illustrated in Fig. 2.

One example of the powertrain system 12 will now be further described with reference to Fig 1 in conjunction with Fig. 2. As shown in Fig. 2, the powertrain system 12 comprises a first electric drive unit 20. The first electric drive unit 20 is configured to generate and transfer torque to any one of a drive axle assembly 11 and a drive wheel 15. In Figs. 1 and 2, the first electric drive unit 20 is configured to generate and transfer torque to the drive axle assembly 11. The drive axle assembly 11 is here connected to a pair of drive wheels 15. Accordingly, the drive axle assembly 11 is configured to transfer torque to the drive wheels 15.

The drive axle assembly 11 comprises a drive axle. The drive axle assembly 11 may comprise a number of connected drive axles forming an interconnected drive axle assembly 11. In FIGS. 1 and 2, the drive axle assembly 11 is a front drive axle assembly. Hence, the drive axle assembly 11 comprises a front axle. The front axle is connected to the pair of front wheels 15 so as to drive (transfer torque) the wheels. 15. As such, the wheels 15 are here connected to the drive axle assembly 11. In other examples, the wheels 15 are integral part of the drive axle assembly 11.

The first electric drive unit 20 comprises an electric machine 22. The electric machine 22 is typically the torque generating device of the first electric drive unit 20.

Moreover, the first electric drive unit 20 comprises a transmission arrangement 24. The transmission arrangement 24 is configured to transfer torque from the electric machine 22. The transmission arrangement 24 is thus typically the torque transfer device of the first electric drive unit 20.

As such, the electric machine 22 is configured to generate torque that is transferred to the drive axle assembly 11 through the transmission arrangement 24.

The transmission arrangement 24 is configured to transfer a rotational movement from the electric machine 22 to a propulsion shaft, sometimes denoted as the drive shaft. The propulsion shaft connects the transmission arrangement to the wheels 15. Some vehicles may use a traditional multispeed transmission, while others employ single-speed transmissions or direct-drive configurations for simplicity and efficiency. Furthermore, although not shown, the electrical machine 22 is typically coupled to the transmission arrangement by a clutch. The electric machine 22 is arranged to receive electric power from any one of the battery system 18 and the fuel cell system 19. The electric machine 22 is here also arranged specifically as a traction electric machine for the vehicle 10. The traction electric machine is configured to provide traction power to the vehicle 10. One example of an electric machine is a permanent magnet synchronous electric machine.

In some examples, the electric machine may be provided in the form of a wheel hub electric machine. In this configuration, the electric machine 22 is configured to generate torque that is transferred directly to the drive wheel 15 through the transmission arrangement 24.

Hence, the first electric drive unit 20 can transfer torque to the drive wheel(s) in several different ways, including that the first electric drive unit 20 is configured to generate and transfer torque directly to the drive axle assembly 11, and then to the drive wheels 15; the first electric drive unit 20 is configured to generate and transfer torque directly to the drive wheel 15, and a combination thereof, i.e. the first electric drive unit 20 is configured to generate and transfer torque directly to the drive axle assembly 11, and then to the drive wheels 15 and the first electric drive unit 20 is configured to generate and transfer torque directly to the drive wheel 15.

Analogously, the powertrain system 12 comprises a second electric drive unit 40. The second electric drive unit 40 is configured to generate and transfer torque to any one of a corresponding drive axle assembly 13 and a corresponding drive wheel 16. In FIGS. 1 and 2, the second electric drive unit 40 is configured to generate and transfer torque to the corresponding drive axle assembly 13. The corresponding drive axle assembly 13 is here connected to a pair of corresponding drive wheels 16. Accordingly, the corresponding drive axle assembly 13 is configured to transfer torque to the corresponding drive wheels 16.

The corresponding drive axle assembly 13 comprises a corresponding drive axle. The corresponding drive axle assembly 13 may comprise a number of connected drive axels forming an interconnected corresponding drive axle assembly 13. In FIGS. 1 and 2, the corresponding drive axle assembly 13 is a rear drive axle assembly. Hence, the corresponding drive axle assembly 13 comprises a rear axle. The rear axle is connected to the pair of rear wheels 16 so as to drive (transfer torque) the wheels. 16. As such, the wheels 16 are here connected to the corresponding drive axle assembly 13. In other examples, the wheels 16 are integral part of corresponding the drive axle assembly 13.

The second electric drive unit 40 comprises a corresponding electric machine 42. The corresponding electric machine 42 is typically the torque generating device of the second electric drive unit 40.

Moreover, second electric drive unit 40 comprises a corresponding transmission arrangement 44. The corresponding transmission arrangement 44 is configured to transfer torque from the corresponding electric machine 42. The transmission arrangement 44 is thus typically the torque transfer device of the second electric drive unit 40.

As such, the corresponding electric machine 42 is configured to generate torque that is transferred to the corresponding drive axle assembly 13 through the corresponding transmission arrangement 44.

In some examples, the corresponding electric machine may be provided in the form of a wheel hub electric machine. In this configuration, the electric machine 42 is configured to generate torque that is transferred to directly to the drive wheel 16 through the corresponding transmission arrangement 44.

Hence, the second electric drive unit 40 can transfer torque to the drive wheel(s) in several different ways, including that the second electric drive unit 40 is configured to generate and transfer torque directly to the corresponding drive axle assembly 13, and then to the drive wheels 16; the second electric drive unit 40 is configured to generate and transfer torque directly to the drive wheel 16, and a combination thereof, i.e. the second electric drive unit 40 is configured to generate and transfer torque directly to the corresponding drive axle assembly 13, and then to the drive wheels 16 and the second electric drive unit 40 is configured to generate and transfer torque directly to the drive wheel 16.

It should be noted that the powertrain system 12 may comprises additional electric drive units having a corresponding electric machine and a corresponding transmission arrangement. Hence, in one example, the powertrain system 12 comprises three electric drive units.

As mentioned above, the electric machines 22, 42 are responsible for converting electrical energy from the battery system 18 and/or the fuel cell system 19 into mechanical power to drive the wheels, such as the set of wheels 15, 16. The electric machine 22. 42 are thus configured to provide traction power to the vehicle 10. Each one of the electric machines 22, 42 is configured to be connected to the battery system 18 and the fuel cell system 19.

Moreover, each electric machine 22, 42 of each electric drive unit 20, 40 is configured to produce positive and negative torque in both directions.

For example, as seen in FIG. 2, the first electric drive unit 20 is controlled to generate a forward torque T1 to propel the vehicle 10, while the second electric drive unit 40 is controlled to generate a corresponding torque T2. In addition, or alternatively, the first electric drive unit 20 is controlled to generate a forward force F1 to propel the vehicle 10, while the second electric drive unit 40 is controlled to generate a corresponding force F2.

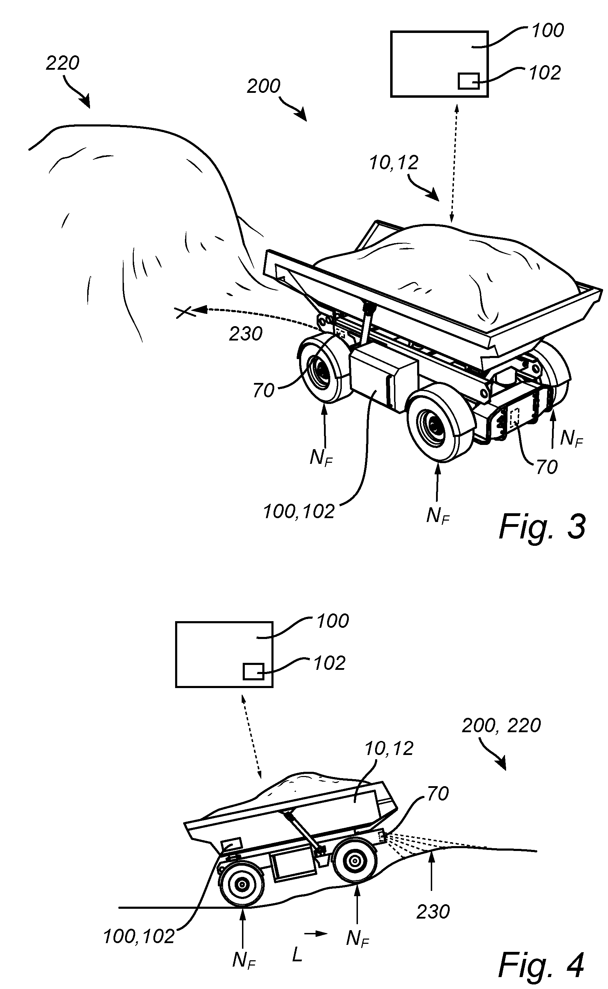

Referring again to FIG. 1, the vehicle 10 comprises at least one forward-looking sensor system 70. The forward-looking sensor system 70 is configured to monitor a ground surface around the vehicle 10, such as a ground surface 230 ahead of the vehicle 10 (see FIGS. 3 to 5). Examples of suitable forward-looking sensor system 70 are lidar systems radar systems, and camera systems (including e.g. stereo and monocular camera systems). While it may be sufficient for some vehicles with one single forward-looking sensor system 70, the vehicle 10 may often include a set of forward-looking sensor systems 70 arranged at various positions around the vehicle 70. By way of example, the forward-looking sensor system 70 comprises a combination of a 2D Lidar sensor, at least one 3D Lidar sensor, at least one camera unit, and optionally at least one wireless device for network positioning, or any other suitable sensor. The installation and arrangement of forward-looking sensor system 70 in vehicles 10 are well-known, and thus not further described herein.

In some examples, where the vehicle 10 is an autonomous vehicle, the vehicle 10 also comprises front wheel and rear wheel steering. Hence, as illustrated in FIG. 1, the vehicle 10 here comprises a front wheel steering device 28 and a rear wheel steering device 26. Each one of the front wheel steering device 28 and the rear wheel steering device 26 is configured to control steering of the respective axle and its corresponding wheels. Each one of the front wheel steering device 28 and the rear wheel steering device 26 is connected to the computer system 100. Hence, the computer system 100 is configured to control steering of a front axle (e.g. the drive axle of the drive axle assembly 11) and a rear axle (e.g. the drive axle of the corresponding drive axle assembly 13). The steering of the front axle and the rear axle can be performed either individually, or in combination. As such, the computer system 100 is configured to control steering of the front axle and the rear axle by means of the front wheel steering device 28 and the rear wheel steering device 26, respectively.

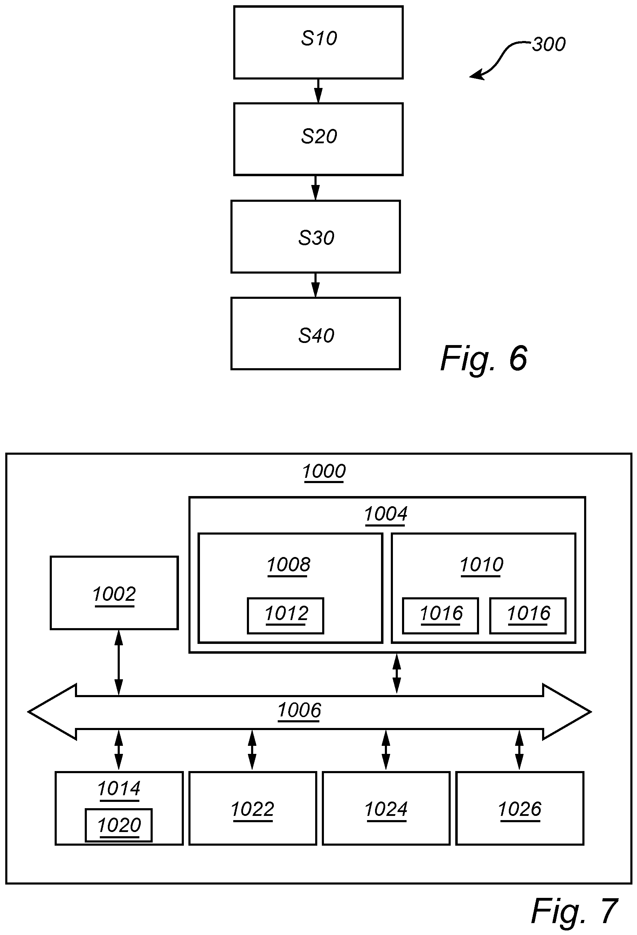

As depicted in FIG. 1, the vehicle 10 comprises the computer system 100. The computer system 100 is configured to function as a controller of the vehicle. By way of example, the powertrain system 12 comprises the computer system 100. The computer system 100 comprises processing circuitry 102. The processing circuitry 102 is configured to control the vehicle 10, as described herein. The computer system 100 may also comprise a memory and a system bus (although not illustrated). These components and further optional technical details of the computer system 100 are described in relation to FIG. 7.

The processing circuitry 102 is configured to determine a target acceleration $\dot{v}_{ref}$ for the vehicle 10. Target acceleration determination is provided to defines the desired acceleration based on driving goals or conditions. By way of example, the target acceleration $\dot{v}_{ref}$ is determined from an acceleration reference that the computer system 100 aims to achieve based on various requirements of a motion control strategy of the vehicle 10, or a vehicle motion control profile. Such vehicle motion control profile can be stored in the memory. In addition, or alternatively, the acceleration reference $\dot{v}_{ref}$ is a predefined value or a dynamically calculated value that guides the computer system 100 on how fast the vehicle 10 should accelerate or decelerate to meet its operational targets. The target acceleration $\dot{v}_{ref}$ is typically an input to a feedforward torque calculation and determines the primary inertial torque required to change the speed of the vehicle. The target acceleration can either be a fixed value (e.g., a constant acceleration) or a dynamically adjusted value.

Moreover, the processing circuitry 102 is configured to determine a ground surface profile for a ground surface 230 that is longitudinally ahead of the vehicle 10, as indicated in FIGS. 3 to 5. The ground surface profile is indicative of an aggregated force acting on the vehicle 10. More specifically, the ground surface profile refers to a representation of the terrain ahead, accounting for its effect on vehicle dynamics, such as aggregated forces due to unevenness, slopes, or friction differences. The ground surface profile determination assesses surface conditions ahead of the vehicle 10, which influence forces acting on the vehicle 10. As such, the ground surface profile comprises data representing, or used to calculate, the aggregated force acting on the vehicle 10.

Typically, the aggregated force refers to a sum of the forces acting on the vehicle 10 due to the ground surface characteristics, e.g. including inclination data. It may also include data to determine gravitational forces and/or frictional forces. The ground surface profile is here determined using the forward-looking sensor system 70 arranged on the vehicle 10. The forward-looking sensor system 70 is in communication with the processing circuitry 102. In this manner, there is provided a configuration based on real-time detection of surface variations, ensuring timely adjustments to the control parameter.

In one example, the aggregated force is also, or alternatively, indicative of forces due to an inclination angle of the ground surface 230. In such example, the aggregated force refers to a sum of the forces acting on the vehicle 10 due to localized ground surface characteristics, e.g. gravitational, frictional forces, the effect of inclination angles and forces per wheel.

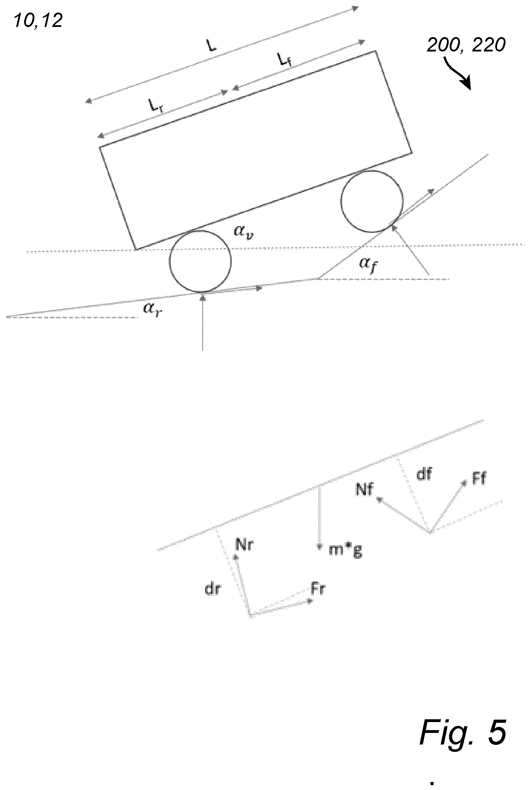

In one extended example, the aggregated force acting on the vehicle 10 may be calculated as a combination of forces acting on respective wheels of the vehicle 10 based on localized ground surface characteristics. As such, the aggregated force here refers to the combined forces acting on the vehicle 10, derived from individual wheel forces and influenced by ground surface characteristics. An example of forces acting on respective wheels of the vehicle 10 based on localized ground surface characteristics is seen in FIG. 3, in which the forces are exemplified as the normal forces $N_F$ acting on respective wheel of the pair of wheel 15, 16. The normal force $N_F$ refers to the force exerted by the road surface perpendicular to the tire (wheel). In this manner, it becomes possible to provide an even more enhanced precision in determining the control parameter by accounting for localized variations in the ground surface 230. In FIG. 3, the ground surface profile amount to a plane ground. Another example of normal forces $N_F$ acting on respective wheels of the pair of wheel 15, 16 is seen in FIG. 4, which represents a ground surface profile in the form of a non-plane ground. Yet another example of normal forces $N_F$ acting on respective wheels of the pair of wheel 15, 16 is seen in FIG. 5, which represents a ground surface profile in the form of a non-plane ground.

In one extended example, the aggregated force acting on the vehicle 10 may be calculated as a combination of forces acting on each wheel of the vehicle 10 based on localized ground surface characteristics, and according to the examples described in relation to FIGS. 3 to 5.

Ground plane estimation using the forward-looking sensor system 70 can be performed in various ways. The process typically involves classifying data from each lidar scan as either ground plane data or non-ground plane data, a step commonly referred to as ground filtering. Based on the classified ground plane data, a curve profile is then fitted to the data through a process known as ground model fitting. The resulting ground model is typically represented as either a single plane or a grid of planar surfaces, where the grid may correspond to features such as a ramp above the vehicle or a roadway divided into multiple segments. To improve the accuracy of the ground plane estimation, knowledge of the vehicle's movement over time can also be incorporated. Specifically, data from multiple lidar sweeps can be aggregated and processed to create a refined ground estimate that accounts for temporal variations and enhances the precision of the ground surface profile. For instance, at a charger, there may be several planes (built up by the normal ground, the ramps up on the charger and then the ramps extending over the charger). Ground surface modeling using a forward-looking sensor system 70, such as a lidar system, is a well-known technology, and thus not further described herein.

Optionally, the ground surface profile may also be determined from data obtained from any one of another vehicle and a remote-control system. Such configuration of the computer system 100 may provide increased accuracy in surface profile prediction by leveraging external data sources. It can also reduce the sensor cost of the vehicle 10. Estimating slope could for example be done only using an IMU instead of a lidar system.

Furthermore, the processing circuitry 102 is configured to estimate a rolling resistance for the vehicle 10 using a vehicle model. By way of example, the rolling resistance is a rolling resistance component derivable from rolling resistance coefficient, which quantifies the resistive force due to friction between the tires and the ground, radius of the wheel(s) and a target (reference) velocity of the vehicle 10.

The term "vehicle model" as used herein refers to a computational or mathematical representation of the vehicle's dynamics specific to rolling resistance estimation. The vehicle model incorporates data indicative of parameters such as the total weight of the vehicle 10, rolling resistance coefficient, wheel radius, and target vehicle speed. The vehicle model is typically configured by the processing circuitry 102 on the basis of this data.

Accordingly, in one example, the vehicle model comprises data indicative of a total weight of the vehicle 10, data indicative of a rolling resistance coefficient, such as a predetermined rolling resistance coefficient, data indicative of a radius of one or more wheels, and data indicative of a target vehicle speed. A vehicle model based on these parameters typically provides enhanced modeling of the vehicle dynamics, leading to more precise control parameters. As mentioned herein, the total weight of the vehicle typically refers to the GCW of the vehicle. The GCW of a truck here refers to the total weight of the entire combination of the truck, including possible use and weight of any trailer, including the cargo, passengers, and any other items carried. The GCW is a standard parameter and can be determined in several different ways, e.g. by weighing the truck, trailer and cargo, from a look-up table, from data received from a remote server or the like. The GCW may also be provided by a route planner system of the computer system 100. Hence, the GCW can likewise be determined from an on-board estimation by one or more weighing sensors and data indicative of the different loads on the vehicle 10. The computer system 100 may generally store the GCW in the memory in beforehand or receive data from a user, driver, operator or the like. It should be noted that the GCW of the vehicle 10 is related to the mass used in the Equations described herein, with the mass being the GCW divided by the acceleration due to gravity (g). The vehicle model may be configured in other ways and with additional parameters.

The processing circuitry 102 is also configured to determine a control parameter for at least one electric drive unit of the vehicle 10 to longitudinally position the vehicle 10 along the ground surface 230. For example, the processing circuitry 102 determines a control parameter for the electric drive unit 20. Alternatively, or in addition, the processing circuitry 102 determines a control parameter for the electric drive unit 40. While the processing circuitry 102 typically determines a control parameter for each one of the electric drive units 20, 40 of the vehicle 10, the processing circuitry 102 may likewise determine a control parameter for a combination of electric drive units of the vehicle 10.

The control command is determined based on the combination of the determined target acceleration $\dot{v}_{ref}$, the determined ground surface profile, and the estimated rolling resistance.

To this end, the computer system 100 is configured to utilize ground surface data acquired from the forward-looking sensor system 70, in the form of a ground surface profile containing an estimate of the ground surface 230 in front of the vehicle. The ground surface profile, in combination with the estimated rolling resistance, is used to predict the required torque for the vehicle 10 to achieve the target acceleration, thereby enabling high-precision longitudinal positioning of the vehicle 10.

In one example, the control parameter is a force-related control parameter. In another example, the control parameter is a torque-related control parameter. It may also be possible that the control parameter is a combination of a force-related control parameter and torque-related control parameter. In this context, the term force-related control parameter is typically indicative of the force needed to drive the vehicle 10 forward, or at least resist backward motion. Analogously, the term torque-related control parameter is typically indicative of the torque needed to drive the vehicle 10 forward, or at least resist backward motion.

It should be noted that the control parameter may typically be used as the control command, such as a control signal, to the controller. In some examples, the control parameter is used at least as a part of the control command to the controller.

For example, the processing circuitry 102 sends the torque-related control parameter to each electric machine 22, 42 of each electric drive unit 20, 40. The processing circuitry 102 communicates with each electric drive unit 20, 40, including the electric machines 22, 42 via a controller area network (CAN) bus. Typically, the processing circuitry 102 sends torque-related control parameter containing specific torque demands every few milliseconds to each electric drive unit. In response, each one of the electric drive units 20, 40 develops the demanded torque at the respective electric machine 22, 42, which is subsequently transferred to the wheels 15, 16 via the respective transmission arrangement 24, 44. Merely as an example, the torque commands from the processing circuitry 102 to the electric drive unit(s) typically contain data of the torque in Nm or fraction of maximum.

In the following, there is described one example of how the relationship behind determining a control parameter in the form of a torque-related control parameter can be derivable. For example, the processing circuitry 102 predicts a required torque $T_{tt}$ for the vehicle 10 using equation 1. The required torque $T_{ff}$ is a torque predicted to be needed for the vehicle 10 to achieve a target motion, taking into account various resistive forces and forces due to desired (target) acceleration and incline of the ground surface 230. Equation 1 is based on the assumption that the vehicle 10 needs to overcome a number of different forces and resistance to traverse the ground surface 230.

(Eq. 1)

$$T_{ff} = m \times r \times \dot{v}_{ref} + k_{roll} \times r \times v_{ref} + m \times g \times r \times \sin \alpha$$

wherein,

Tff = required torque for the vehicle [Nm]

m = mass of the vehicle [kg]

r = effective radius of the wheel or drive mechanism [m]

$\dot{v}_{ref}$ = target (reference) acceleration for the vehicle (rate of change of the reference velocity) [m/s2]

$k_{roll}$ = rolling resistance coefficient (assumed friction between the wheels/ tires and the ground)

$\dot{v}_{ret}$ = target (reference) velocity of the vehicle [m/s]

$g$ = acceleration due to gravity [m/s2]

$\propto$ = inclination angle of the ground (the slope or incline the vehicle is traveling on)

Moreover, as mentioned above, a vehicle model can be configured based on the mass m of the vehicle (or total weight of the vehicle), the rolling resistance coefficient, the radius of one or more wheels, and the target velocity for the vehicle $\dot{v}_{ref}$. As such, these paratemeter here corresponds to the vehicle model.

As mentioned above, the inclination angle $\propto$ of the ground surface 230 is typically derived from data acquired from the forward-looking sensor system 70.

Moreover, as mentioned above, data about the target acceleration $\dot{v}_{ref}$ is determined from an acceleration reference for the vehicle 10. In addition, or alternatively, the acceleration reference $\dot{v}_{ref}$ can be a predefined value or a dynamically calculated value. Such data, or value, can be stored in the memory. Analogously, the target velocity for the vehicle $\dot{v}_{ref}$ or data about the target velocity for the vehicle $\dot{v}_{ref}$ is determined from a speed reference for the vehicle 10. The speed reference can be a predefined value or a dynamically calculated value. Such value, or data, can be stored in the memory. Analogously, data of the radius r of respective wheel can be stored in the memory. In addition, data of the rolling resistance coefficient $k_{roll}$ can also be stored in the memory. The rolling resistance coefficient $k_{roll}$ may be a predetermined value stored in the memory. The acceleration due to gravity g is a standard value, that may also be stored in the memory.

It can be noted that the component m $\times$ r $\times$ $\dot{v}_{ref}$ here represents a torque component required to accelerate the vehicle, as dictated by Newton's second law. In Equation 1, the component is converted to torque by multiplying by the wheel radius r. The component is included in the Equation 1 to compute needed torque in relation to target acceleration given the mass m and wheel radius r of the vehicle 10.

Moreover, it can be noted that the component $k_{roll}$ $\times$ r $\times$ $\dot{v}_{ref}$ represents a torque component that can be denoted as the rolling resistance torque that opposes the vehicle's motion as the vehicle moves forward. The component is included in the Equation 1 to compute needed torque for overcoming the rolling resistance forces acting on the vehicle 10 due to factors such as tire deformation, ground surface characteristics, and vehicle speed.

Furthermore, it can be noted that the component m $\times$ $g$ $\times$ r $\times$ sin $\propto$ represents a gravitational torque component required to counteract the component of gravity acting on the vehicle along the incline. The force due to gravity on an incline is m $\times$ $g$ $\times$ sin $\propto$ and when multiplied by the wheel radius r, it gives the torque needed to keep the vehicle 10 stable on the slope or to overcome the gravitational force while moving uphill.

As such, the total torque $T_{ff}$ is the sum of the above three components, i.e. an inertial torque component to achieve the desired acceleration, a rolling resistance torque component to counteract frictional losses, and a gravitational torque component to counter the effect of an incline. More specifically, the total torque Tff is the control torque that should be applied to the drive system, such as the electric drive unit(s) 20, 40, to maintain the desired acceleration and speed over varying terrain conditions. By calculating each component based on real-time data (such as acceleration, vehicle mass, speed, and slope angle), the computer system 100 can proactively apply torque to achieve precise, smooth and efficient motion.

Equation 1 describes an example of computing a required torque $T_{tt}$ for use as a torque-related control command in a feedforward torque control profile for the vehicle 10. In such feedforward control profile, the torque $T_{ff}$ is the total feedforward torque $T_{ff}$, which is calculated in advance, allowing the vehicle's control system (computer system 100) to proactively adjust for anticipated forces rather than waiting for deviations to occur. Such an approach enhances performance by applying just the right amount of torque needed to maintain the target trajectory, especially in situations with predictable resistive forces and inclines. Referring to FIG. 2, the determined torque-related control command indicative of the required torque $T_{ff}$ can be translated into the torques T1 and T2.

For the sake of clarification, the required torque, i.e. the torque $T_{ff}$, is one example of a torque-related control parameter, as described herein. Equation 1 may likewise be used to determine a torque-related control parameter for a feedback torque profile. It should be noted that the above Equation 1 may likewise be adjusted to determine force-related control parameter. In such example, Equation 1 is set up to calculate forces rather than torques. Referring to FIG. 2, the determined force-related control command indicative of the required force can be translated into the force F1 and F2.

Optionally, the processing circuitry 102 is configured to determine the control parameter in response to a need for high-precision longitudinal positioning of the vehicle 10. As such, the processing circuitry 102 is configured to initiate the control of the vehicle 10 based on the combination of the determined target acceleration $\dot{v}_{ref}$, the determined ground surface profile, and the estimated rolling resistance, and in response to a determined need for high-precision longitudinal positioning of the vehicle 10.

For this reason, the processing circuitry 102 is here also configured to determine a need for high-precision longitudinal positioning of the vehicle 10.

For example, the processing circuitry 102 is configured to control the one or more of the first and second electric drive units 20, 40 according to the control parameter. More specifically, the processing circuitry 102 is configured to control the first and second electric drive units according to the control parameter, and in response to the determined need for high-precision longitudinal positioning of the vehicle 10.

As mentioned herein, the control parameter can either be a force-related control parameter or a torque-related control parameter. By way of example, the processing circuitry 102 is configured to control the any one of the first and second electric drive units 20, 40 according to a torque-related control parameter, such as the determined control torque $T_{ff}$ described above.

The torque-related control parameter can contain a control parameter commanding any one of the first and second electric drive units 20, 40 to provide a torque in a forward direction of the vehicle 10, As such, the control parameter is also typically a control parameter, or control mode, of the powertrain system 12.

Such configuration and operation of the electric drive units 20, 40 not only provides improved control, but also improved efficiency and responsiveness of the powertrain system 12, which is particularly beneficial during high-precision positioning of the vehicle 10. To this end, the vehicle 10 can achieve high-precision longitudinal positioning and overall better performance.

In this context, high-precision longitudinal positioning is typically a longitudinal positioning of the vehicle 10 in which the vehicle 10 moves in a longitudinal direction L of the vehicle 10 by a positional tolerance that is within a predefined narrow range compared to a broader range for normal longitudinal positioning precision.

As such, the processing circuitry 102 is configured to make a distinction between high-precision longitudinal positioning and normal precision longitudinal positioning. By way of example, the processing circuitry 102 is configured to make a distinction between high-precision longitudinal positioning and normal precision longitudinal positioning by specifying that high-precision longitudinal positioning involves maintaining the vehicle's position within a tighter tolerance compared to normal longitudinal positioning precision. By way of example, high-precision longitudinal positioning of the vehicle 10 refers to a positional tolerance within $\pm 10$ cm relative to the true position in the world.

It should be noted that the torques provided from the first and second electric drive units 20, 40 are either positive or negative. Positive torque is typically applied to propel the vehicle forward, facilitating acceleration and maintaining motion of the vehicle. Negative torque, on the other hand, is typically used to decelerate the vehicle, often through regenerative braking, where the electric machine functions as a generator to convert kinetic energy into electrical energy and store it in battery system.

The need for high-precision longitudinal positioning of the vehicle 10 can be determined in several different manners. By way of example, the processing circuitry 102 is configured to determine the need for high-precision longitudinal positioning of the vehicle 10 from data indicative of a need for high-precision longitudinal positioning of the vehicle 10.

The data is e.g. based on any one of a driver request, an automatically detected driving condition and an automatically detected external situation requiring high-precision longitudinal positioning of the vehicle 10. The external situation may refer to a dumping location, a charging situation or at, or during, a pocket dumping event, or at an automatic parking of the vehicle 10.

In addition, or alternatively, the data may be based on a fleet coordination system request requiring high-precision longitudinal positioning of the vehicle 10 at a given geographical location. For example, the computer system 100 is in communication with a fleet coordination system configured to transfer a request to the computer system 100 containing a high-precision longitudinal positioning requirement for the vehicle 10. The high-precision longitudinal positioning requirement can be obtained from sensors, GPS, navigational data and/or topology data of the route for the vehicle 10.

In addition, or alternatively, the computer system 100 is directly in communication with sensors and GPS so as to monitor driving conditions and external conditions, and subsequently determine when high precision longitudinal positioning of the vehicle 10 is necessary.

The need for high-precision longitudinal positioning of the vehicle 10 can be determined by the processing circuitry 102 from received travel mission data for the vehicle 10. For example, the processing circuitry 102 receives travel mission data containing data about an intended route for completing a transport mission. To this end, the processing circuitry 102 obtains transport mission characteristics for an upcoming transport mission for the vehicle 10. The travel mission data can be varied for different types of vehicles 10. By way of example, the travel mission data contains data indicative of a requested transport mission to transport materials and/or goods from a first point (position / location) to a second point (position / location) along a planned route. In other words, the transport should be performed by the vehicle 10 from the geographical starting point (first position) to a geographical destination (second position). In this example, the travel mission data contains data indicating a need for high-precision longitudinal positioning of the vehicle 10 at geographical destination. Other examples are also possible, such as a transportation of people. The processing circuitry 102 is typically configured to determine transport mission characteristics for the upcoming transport mission for the vehicle 10 based on the received transport mission data. The travel mission data can be provided in several different manners to the processing circuitry 102. In addition, the travel mission data may contain several different types of data. By way of example, the travel mission data for the upcoming transport mission for the vehicle 10 comprises transport mission data indicative of at least the destination location and a destination time. The destination time refers to a point in time for the vehicle 10 to arrive at the destination point.

In addition, or alternatively, the processing circuitry 102 is configured to determine a need for high-precision longitudinal positioning of the vehicle 10 along a route based on any one of topography data and vehicle data. Thus, the processing circuitry 102 is typically also configured to obtain topography data and vehicle data, including e.g. real-time road condition data for the route (and/ or the road). From the real-time road condition data, the processing circuitry 102 determines one or more vehicle pathway characteristic for the road based on topology data. The vehicle pathway characteristic can be provided in several different manners to the processing circuitry 102. In addition, the vehicle pathway characteristic may contain several different types of data. By way of example, the vehicle pathway characteristic is obtained from data of a topology map over the road. The topology data / topology map can be obtained from a drone scan 3D map.

In addition, or alternatively, the processing circuitry 102 is configured to obtain topology data from a number of data sources, such as digital maps, GPS data, or geographic information system (GIS) databases. These sources may generally include relevant information about the road network, including roads, elevation data, inclination data, and potential destinations. In one example, the topology data is received by the processing circuitry 102 from a route planner system of the computer system 100 and/or the vehicle 10. In other examples, the topology data is obtained from previous transport missions along the planned route.

Moreover, the vehicle pathway characteristic here comprises data indicative of at least a road inclination. For example, the vehicle pathway characteristic comprises data indicative of a road inclination associated with the geographical position and/or the intended route for the vehicle 10.

In addition, or alternatively, the topology data of the intended route for the transport mission may comprise relevant data for determining the route profile at the geographical position and/or for the intended route for the vehicle 10, including elevation changes, inclination and inclination changes, road grade, and terrain type (urban, highway, off-road, etc.).

As mentioned herein, the processing circuitry 102 is configured to control longitudinally positioning of the vehicle 10 along the ground surface based on the determined control parameter.

In one example, the processing circuitry 102 is configured to implement a predictive control schema, wherein the control parameter is adjusted proactively to maintain the desired target acceleration of the vehicle.

In such example, the processing circuitry 102 is configured to anticipate changes in the aggregated force acting on the vehicle 10 from the ground surface profile and adjust the control parameter proactively to maintain the desired target acceleration of the vehicle 10. In such example, the processing circuitry 102 is further configured to adjust the control parameter based on real-time feedback from the forward-looking sensor system 70. Accordingly, the control parameter is used as part of a feedforward control profile for the vehicle 10. Hereby, the processing circuitry is configured to use the ground surface profile to estimate disturbances in advance, enabling proactive adjustment of the control parameter and improving the overall control performance in terms of response time and disturbance rejection.

In addition, or alternatively, the processing circuitry 102 is configured to receive data indicative of a deviation between an actual longitudinal position of the vehicle 10 and a desired longitudinal position of the vehicle 10, and adjust the control parameter in response to the deviation to move the vehicle 10 to the desired longitudinal position. Accordingly, the control parameter may be used as a part of a feedback control profile for the vehicle.

Typically, the processing circuitry 102 integrates feedforward and feedback control elements to optimize the vehicle's response to both known and unknown disturbances. The feedforward element leverages the estimated ground profile to preemptively adjust the control parameter, minimizing the impact of predictable disturbances such as ground slope variations. Simultaneously, the feedback element corrects deviations from the desired trajectory caused by residual or unknown disturbances. Such integrated approach, particularly when implemented in a predictive control schema, provides improved control performance and better disturbance handling.

Controlling one or both of the first and second electric drive units 20, 40 based on the control parameter is particularly useful during driving forward with a need for precision control of the vehicle 10. FIGS. 3 to 5 illustrate a number of situations when a control of the first and second electric drive units 20, 40 based on the control parameter may be particularly useful. In these examples, the vehicle 10 is the autonomous electric vehicle as described in relation to FIGS. 1 and 2.

FIG. 3 illustrates an example of controlling the vehicle 10 in a high-precision positioning situation 200 in the form of a dumping location 220. That is, the vehicle 10 needs to be positioned in the longitudinal direction L along a pathway in a confined geographical area and in relation to the destination indicated by reference X, which is a suitable destination for ensuring reliable unloading of material from the vehicle 10 at the dumping location 220. Thus, the vehicle 10 needs to be positioned in relation to the dumping location 220. FIG. 4 illustrates a similar example of when there is a need for high-precision positioning of the vehicle 10 in the longitudinal direction L. In FIG. 4, the vehicle 10 approaches an uphill road segment prior to the dumping location 220. FIG. 4 also illustrates an automatically detected high-precision positioning situation 200 in the form of a pocket dumping event, requiring high-precision longitudinal positioning of the vehicle 10.

In the above situations, exemplified by FIGS. 3 and 4, the computer system 100 is used to control the one or more of the first and second electric drive units 20, 40 according to the control parameter.

Initially, the processing circuitry 102 obtains data indicative of a need for high-precision longitudinal positioning of the vehicle 10. In these examples, the data is based on an automatically detected external situation requiring high-precision longitudinal positioning of the vehicle 10. The automatically detected external situation is detected from topography data and vehicle data, including receiving data indicative of the real-time position of the vehicle 10 and the location of the dumping location 220, e.g. data about the location of the needed positioning of the vehicle 10 at location X (FIG. 3).

In response to the acquired data of the automatically detected external situation, the processing circuitry 102 determines that there is a need for high-precision longitudinal positioning of the vehicle 10. The need for high-precision longitudinal positioning of the vehicle 10 can also be determined by receiving data of an automatically detected driving condition indicating a need for high-precision longitudinal positioning of the vehicle 10, or any other situation, including e.g. a request from the driver.

Subsequently, in response to the determined need for high-precision longitudinal positioning of the vehicle 10, the processing circuitry 102 determines the target acceleration for the vehicle 10. The target acceleration may correspond to the desired rate of change of velocity for the vehicle 10 in the longitudinal direction L, ensuring smooth and precise movement toward the destination at the dumping location 220. The determination of the target acceleration may account for various factors as described above. By determining the target acceleration, the processing circuitry 102 ensures that the vehicle 10 can achieve the desired high-precision positioning along the pathway in a controlled and efficient manner.

The processing circuitry 102 also determines the ground surface profile for a ground surface 230 that is longitudinally ahead of the vehicle 10. The ground surface profile is indicative of an aggregated force acting on the vehicle 10 and provides critical information about the terrain characteristics ahead of the vehicle. The ground surface profile may be obtained using a forward-looking sensor system 70 arranged on the vehicle 10, which may include radar, lidar, and/or a camerabased systems. The ground surface profile can include details such as surface gradients, roughness, or other localized characteristics that could influence the aggregated force. In this context, the aggregated force refers to the sum of forces acting on the vehicle due to the ground surface 230, including gravitational forces, frictional forces, and any external resistance caused by the terrain. Such information is used to predict how the vehicle 10 will interact with the ground surface 230 as it moves toward the dumping location 220.

Next, the processing circuitry 102 estimates a rolling resistance for the vehicle 10 using a vehicle model. The rolling resistance corresponds to the resistive force that opposes the motion of the vehicle due to deformation of the wheels and the ground surface 230. The vehicle model utilized by the computer system 100 may include parameters such as the total weight of the vehicle, a rolling resistance coefficient, the radius of one or more wheels, and a target vehicle speed. By incorporating these parameters, the vehicle model provides an accurate estimation of the rolling resistance, which is critical for calculating the control parameter and ensuring that the vehicle maintains optimal performance during high-precision positioning.

Based on the combination of the determined target acceleration, the ground surface profile, and the estimated rolling resistance, the processing circuitry 102 determines a control parameter for the electric drive unit of the vehicle 10. The control parameter is used to adjust the operation of the electric drive unit to achieve the desired longitudinal positioning along the ground surface 230. For example, the control parameter may involve torque adjustments, speed regulation, or power modulation to compensate for the aggregated force and rolling resistance while maintaining the target acceleration. By determining the control parameter in this manner, the computer system 100 ensures precise and efficient control of the vehicle 10, enabling it to reach the designated destination at the dumping location 220 with high positional accuracy.

In this process, the control command issued to the electric drive unit reflects a balance between the various dynamic factors influencing the vehicle's movement. This ensures that the vehicle 10 responds effectively to the real-time conditions of the ground surface 230 while meeting the operational requirements of the high-precision positioning situation 200. By dynamically integrating the target acceleration, ground surface profile, and rolling resistance into the control parameter calculation, the system minimizes errors in positioning, reduces energy consumption, and enhances the overall stability and performance of the vehicle 10.

In FIGS. 3 and 4, the first electric drive unit 20 is controlled to generate a forward torque T1 to propel the vehicle 10, while the second electric drive unit 40 is controlled to generate a corresponding torque T2.

The above examples in relation to FIGS. 3 and 4 are only brief examples of the disclosure for the ease of describing and illustrating the operations of the proposed powertrain system 12, the computer system 100 and the methods herein. Other examples of locations where high precision control of the vehicle are particularly useful include ramps, such as those leading to a charging station. The charging station often has a distinct ground profile that must be accounted for. Another example is when reversing into a designated pocket or bay.

It should also be noted that in the above examples, as described in relation to FIGS. 3 and 4, the vehicle 10 of any one of FIGS. 3 and 4 may be configured to autonomously navigate towards the destination X. To navigate towards to, and until reaching the destination X, the autonomous vehicle 10 needs to know its location with respect to the destination X. To locate the vehicle 10 with respect to the destination X, a localization service may be used. To this end, the vehicle 10 is here arranged with a set of sensors (not illustrated). Any sensor in the set of sensors may be mounted at any suitable location of the autonomous vehicle 10. For example, the set of sensors may comprise at least one 2D Lidar sensor, at least one 3D Lidar sensor, at least one camera unit, at least one wireless device for network positioning, or any other suitable sensor. In some examples, the at least one 2D Lidar sensor may be arranged on multiple or all sides of the autonomous vehicle 10, e.g. such that the at least one 2D Lidar sensor is capable of scanning all surroundings of the autonomous vehicle 10. The at least one 3D Lidar sensor may be arranged on the roof of the autonomous vehicle 10 to be able to scan 360 degrees around the autonomous vehicle 10. The at least one wireless device may comprise any suitable wireless device which can communicate with any number of suitable network entities in a wireless network. Based on a signal from the wireless device, the network entities may be able to triangulate the position of the wireless device, and thereby also locate the autonomous vehicle 10, and report the location back to the wireless device. Any other suitable methodology for locating the autonomous vehicle 10 with the use of the wireless network may also apply. For example, this may be any suitable telecommunications positioning methodology, e.g. by using ultra-wide band positioning and triangulation. The at least one camera unit may comprise one or more different types of camera units arranged in one or more places of the autonomous vehicle 10. The at least one camera unit may comprise a Red, Green, Blue and Depth (RGBD) sensor camera unit which can record the surroundings and account for depth. The at least one camera unit may additionally, or alternatively, comprise any one of one or more infrared cameras, heat cameras, stereo cameras. Furthermore, the set of sensors may comprise any suitable sensor device for communicating with a Global Navigation Satellite System (GNSS) for finding the location of the autonomous vehicle 10 based on communication with satellites. The GNSS may for example be GPS or any other alternatives, e.g. BeiDou, Galileo, GLONASS, or any other suitable satellite positioning system. Other navigation systems are also conceivable as used within autonomous vehicles.

In one example, the vehicle 10 is an autonomous electric vehicle operating with a confined geographical area for autonomous vehicles 10. In such example, the disclosure of the proposed powertrain system 12, the computer system 100 and the methods may be particularly useful. By way of example, defining the confined geographical area for autonomous vehicles here involves specifying the boundaries and parameters within which these vehicles are authorized to operate. The definition of the confined geographical area often includes considerations for geographic limits and operational boundaries for the vehicle 10. More specifically, the confined geographical area for autonomous vehicles 10 is defined by any one of geographic coordinates, which specifies the geographical coordinates (latitude and longitude) that define the boundaries of the area, physical landmarks, which identifies physical landmarks or boundaries that set the edges of the confined area, and digital mapping, which utilizes digital mapping technologies to create a virtual boundary for the confined area. GPS-based mapping systems can e.g. be employed to create a geofence, a virtual perimeter that the autonomous vehicles should not cross. GPS or RFID (Radio-Frequency Identification) may also be used to further create a virtual boundary. The definition of the confined geographical area may also be based on operational boundaries, which specify operational constraints within the confined area. The operational constraints may include speed limits, specific routes, or areas where certain vehicle behaviors are restricted or encouraged. The definition of the confined geographical area may also be based on environmental conditions (e.g. weather conditions, lighting, or specific road surfaces). The definition of the confined geographical area may also be based on legal and regulatory framework and various safety measures. Also, in order to allow for communication between the vehicles, the confined geographical area may generally include a communication protocols so as to establish communication protocols between the autonomous vehicles and a central control system or infrastructure within the confined area. In this manner the vehicles 10 can be monitored in real-time and further coordinated in relation to each other.

FIG. 5 illustrates yet another example of normal forces, here denoted as N acting on respective wheel of the pair of wheels 15, 16 due to the inclination of the ground surface. FIG. 5 is a schematic illustration of the forces acting on one side of the vehicle 10. In the equations 2 to 9 and FIG. 5, it should be noted that the normal forces are indicated by N, while the driving forces are indicated by F. Moreover, it should be noted that the driving force, as described hereinafter, is another example of a force-related control parameter for the electric drive unit(s).

In FIG. 5, the vehicle 10 is driving in an uphill towards a charger or the like. In FIG. 5, the ground surface profile is in the form of a non-plane ground. The vehicle 10 is the same as the vehicle described in FIGS. 1 to 4, and the features and terms used in relation to FIGS. 1 to 4 are likewise applicable to FIG. 5, unless specified otherwise. The axle distance of the vehicle 10 is denoted with L, the distance from the mass center to the front axle is $L_f$, and the distance from the mass center to the rear axles is $L_r$.

In view of the FIG. 5, the following equations can be derived.

(Eq. 2)

$$\alpha_f = \alpha_{g,f} - \alpha_v \qquad \alpha_r = \alpha_{g,r} - \alpha_v$$

Equation 2 describes the effective angles of the ground at the front and rear axles of the vehicle, adjusted for the vehicle's own inclination. $\alpha_f$ is the effective angle at the front axle. It is determined by subtracting the vehicle inclination angle $\alpha_v$ from the ground slope angle at the front wheels, denoted as $\alpha_{g,f}$. Similarly, $\alpha_r$ is the effective angle at the rear axle, derived by subtracting the vehicle inclination angle $\alpha v$ from the ground slope angle at the rear wheels, $\alpha_{g,r}$. These adjustments ensure that the forces acting on the vehicle 10, particularly at the wheels, account for both the terrain slope and the vehicle's inclination. This is used for accurately modeling the longitudinal and vertical dynamics of the vehicle, where the effective angles influence calculations of normal forces, driving forces, and torques. By using $\alpha_f$ and $\alpha_r$, the equations can correctly reflect how the terrain impacts the vehicle's motion and stability.

(Eq. 3)

$$N_{k,x} = -N_k sin(\alpha_k), \qquad k \in \{r, f\}$$

$$N_{k,y} = N_k cos(\alpha_k) \qquad k \in \{r, f\}$$

Equation 3 describes the normal forces acting at the vehicle's wheels, projected onto the vehicle frame. The subscript $k$ refers to the wheel location, where $k \in \{r, f\}$ means that the equations apply to both the rear ($r$) and front ($f$) wheels. $N_{k,x}$ is the horizontal component of the normal force $N_k$, which is obtained by projecting $N_k$ along the x-axis using the sine of the effective angle $\alpha_k$. The minus sign indicates that this component acts in the opposite direction to the slope of the ground. $N_{k,y}$ is the vertical component of the normal force $N_k$, projected onto the y-axis using the cosine of the effective angle $\alpha_k$. This component acts perpendicularly to the ground and supports the weight of the vehicle 10. These projections are used for analyzing the forces acting on the vehicle 10 under inclined or uneven ground conditions. By decomposing the normal force into its horizontal and vertical components, the resulting force balance equations can accurately reflect the vehicle's dynamics.

(Eq. 4)

$$F_{k,x} = F_k cos(\alpha_k), \qquad k \in \{r, f\}$$

$$F_{k,y} = F_k sin(\alpha_k), \qquad k \in \{r, f\}$$

Equation 4 describes the driving forces acting on the vehicle 10, projected onto the vehicle frame. $F_{k,x}$ represents the horizontal component of the driving force $F_k$. This component is determined by projecting $F_k$ onto the x-axis using the cosine of the effective angle $\alpha_k$. The horizontal component contributes to the forward (longitudinal) motion of the vehicle. $F_{k,y}$ represents the vertical component of the driving force $F_k$. It is obtained by projecting $F_k$ onto the y-axis using the sine of the effective angle $\alpha_k$. The vertical component accounts for any force acting along the slope of the ground surface. These force projections are used for analyzing the vehicle's behavior on inclined or uneven terrain. By decomposing the driving force into horizontal and vertical components, the equations allow for accurate modeling of the forces influencing the vehicle's motion and stability.

(Eq. 5)

$$m\dot{v}_x = F_f cos(\alpha_f) + F_r cos(\alpha_r) - N_f sin(\alpha_f) - N_r sin(\alpha_r) - mg sin(\alpha_v)$$

Equation 5 represents the sum of forces acting on the vehicle 10 in the forward (longitudinal) direction. The longitudinal motion of the vehicle 10 depends on the contributions of the driving forces $F_f$ and $F_r$ at the front and rear wheels, the influence of the normal forces $N_f$ and $N_r$, and the gravitational component along the vehicle's inclination angle $\alpha_v$.

(Eq. 6)

$$m\dot{v}_y = F_f sin(\alpha_f) + F_r sin(\alpha_r) + N_f cos(\alpha_f) + N_r cos(\alpha_r) - mgcos(\alpha_v)$$

Equation 6 represents the forces acting in the vertical direction, assuming the forces balance out. The vertical components of the driving forces $F_f$ and $F_r$ and the normal forces $N_f$ and $N_r$ act against the gravitational force component perpendicular to the vehicle's inclination angle $\alpha_v$.

(Eq. 7)

$$I\dot{\omega} = F_f cos(\alpha_f)d_f + F_r cos(\alpha_r)d_r - N_f sin(\alpha_f)d_f - N_r sin(\alpha_r)d_r + F_f sin(\alpha_f)l_f - F_r sin(\alpha_r)l_r \\ + N_f cos(\alpha_f)l_f - N_r cos(\alpha_r)l_r$$

Equation 7 describes the rotational motion of the vehicle about its center of mass. The term I represents the moment of inertia of the vehicle about its rotational axis (often associated with the yaw axis). It is a measure of the resistance to angular acceleration about that axis, and its role in these equations is to relate the torques acting on the vehicle to the angular acceleration $\dot{\omega}$. The torque contributions come from the driving forces $F_f$ and $F_r$, the normal forces $N_f$ and $N_r$, and their respective lever arms $d_f$, $d_r$, $lf$, $lr$. The effective angles $\alpha_f$ and $\alpha_r$ influence how these forces are projected.
Moreover, equation 5 is the longitudinal dynamics equation, which models how forces in the x-direction contribute to the vehicle's forward motion, factoring in driving forces, normal forces, and gravitational forces. Equation 6 is the vertical dynamics equation, which ensures that the forces in the y-direction balance out, as there is no significant acceleration in this direction under steady-state conditions. Equation 7 is the rotational dynamics equation, which captures the torques generated about the vehicle's center of mass due to the forces acting at different distances (lever arms) on the vehicle's front and rear wheels. These equations together describe the complete motion of the vehicle, considering forces in the longitudinal and vertical directions as well as rotational effects.
Assuming now the following operational situation of the vehicle 10:

- There is no acceleration in the y-direction, i.e. $\dot{v}_y$ = 0
- The vehicle (wheel) has low rotational speed, i.e. $\dot{\omega}$ ≈ 0
- The driving force is symmetrical at the front and rear wheels, i.e. Ff = Fr = F

Then, the following system of equations is obtained:

(Eq. 8)

$$m\dot{v}_x = Fcos(\alpha_f) + Fcos(\alpha_r) - N_f sin(\alpha_f) - N_r sin(\alpha_r) - mgsin(\alpha_v)$$

$$0 = Fsin(\alpha_f) + Fsin(\alpha_r) + N_f cos(\alpha_f) + N_r cos(\alpha_r) - mgcos(\alpha_v)$$

$$0 = Fcos(\alpha_f)d_f + Fcos(\alpha_r)d_r - N_f sin(\alpha_f)d_f - N_r sin(\alpha_r)d_r + Fsin(\alpha_f)l_f - Fsin(\alpha_r)l_r \\ + N_f cos(\alpha_f)l_f - N_r cos(\alpha_r)l_r$$

Under the given above assumptions, the equations 2 to 8 simplify the complex dynamics of the vehicle to a solvable set of equations. As such, given the weight of the vehicle, the ground angles $\alpha_f$, $\alpha_r$, $\alpha_v$, and a desired longitudinal acceleration $\dot{v}_x$, it is possible to solve the set of equations for $F$, which here refers to the required symmetrical driving force. It is also possible to solve the equation for $N_f$ and $N_r$, which are the normal forces at the front and rear wheels. The solution provides the driving force needed to maintain the desired acceleration while considering the effects of gravity, normal forces, and typically also rolling resistance. To make the estimation even more accurate, the desired driving force can be corrected for rolling resistance. A simple model for rolling resistance is dependent on the normal force $N_k$, k = f, r and the speed. Hence, the force F that needs to be created by a electric drive unit should be:

(Eq. 9)

$$F_{k,motor} = F_k - \mu v_x N_k, \qquad k \in \{r, f\}$$

The resulting driving forces serve as the control parameter(s), i.e. the inputs, for feedforward control, allowing for smoother and more efficient vehicle operation. As such, the resulting driving forces are examples of required forces for use as one or more force-related control commands for the vehicle, such as control command for the electric drive units 20, 40. Referring to FIG. 2, the determined force-related control command indicative of the required force can be translated into the forces F1 and F2. By way of example, the first electric drive unit 20 is controlled to generate a forward force F1 to propel the vehicle 10 based on the calculated driving force F, serving as a control command, while the second electric drive unit 40 is controlled to generate a corresponding force F2.

FIG. 6 is a flow chart of an exemplary method to control a vehicle 10 according to an example. More specifically, FIG. 6 is an exemplary computer implemented method 300 according to an example. Thus the method 300 is implemented by the computer system 100 and the processing circuitry 102, as described herein. The computer-implemented method 300 is intended for controlling a vehicle 10, such as the electric autonomous vehicle of FIGS. 1 to 5.

As illustrated in FIG. 6 the method comprises a step S 10 of determining, by the processing circuitry 102 of the computer system 100, a target acceleration for the vehicle 10.

Moreover, the method 300 comprises a step S20 of determining, by the processing circuitry 102, a ground surface profile for a ground surface that is longitudinally ahead of the vehicle 10. The ground surface profile is indicative of an aggregated force acting on the vehicle. Further, the method 300 comprises a step S30 of estimating, by the processing circuitry 102, a rolling resistance for the vehicle 10 using a vehicle model. In addition, the method 300 comprises a step S40 of determining, by the processing circuitry 102, a control parameter for at least one electric drive unit 20, 40 of the vehicle 10 to longitudinally position the vehicle 10 along the ground surface. The control command is determined based on the combination of the determined target acceleration, the ground surface profile, and the estimated rolling resistance.

Typically, the method may also comprise an initial step of determining, by the processing circuitry 102 of the computer system 100, a need for high-precision longitudinal positioning of the vehicle 10. In such example, the method 300 determines the target acceleration for the vehicle 10 in response to the determined need for high-precision longitudinal positioning of the vehicle 10.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

The processing circuitry 102 of the computer system 100 may be communicatively connected with any one of one or more sensors of the vehicles 10, sensors within a confined geographical area, the GNSS, and a wireless network (not shown). The processing circuitry 102 may further be able to actuate the navigation of the autonomous vehicles 10, or at least be able to provide commands to the autonomous vehicles 10. The processing circuitry 102 may also be configured to feed additional motion commands to the vehicle 10 for realizing the route associated with the transport mission.

Typically, as illustrated in FIG. 1, the computer system 100 is an integral part of the powertrain system 12. In other examples, the computer system 100 and the powertrain system 12 may be separate parts of the vehicle 10 that are configured to communicate with each other. In addition, or alternatively, the computer system 100 is here an integral part of the vehicle 10. In addition, or alternatively, the computer system 100 may e.g. be a part of a remote server, such as a central control system, or the like, while further being configured to be in communication with one or more corresponding sub-controllers 100 of the vehicle 10. Hence, in some examples, there is provided a computer system 100 comprising a central control system and a sub-controller, and wherein the central control system is configured to be in communication with the sub-controller of the vehicle 10 so as to control the vehicle 10.

Further details of one example of a computer system that can be used as the computer system 100 will now be described in relation to FIG. 7.

FIG. 7 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system 100 for a vehicle 10, wherein the computer system comprises processing circuitry 102 configured to: determine a target acceleration for the vehicle; determine a ground surface profile for a ground surface 230 that is longitudinally ahead of the vehicle, the ground surface profile being indicative of an aggregated force acting on the vehicle; estimate a rolling resistance for the vehicle using a vehicle model; and

determine a control parameter for an electric drive unit of the vehicle to longitudinally position the vehicle along the ground surface, wherein the control command is determined based on the combination of the determined target acceleration, the ground surface profile and the estimated rolling resistance.

Example 2. The computer system of Example 1, wherein the aggregated force is calculated as a combination of forces acting on respective wheel of the vehicle based on localized ground surface characteristics.

Example 3. The computer system of Example 1 or Example 2, wherein the ground surface profile is determined using a forward-looking sensor system 70 arranged on the vehicle.

Example 4. The computer system of any of Examples 1-3, wherein the ground surface profile is determined from data obtained from any one of another vehicle and a remote-control system.

Example 5. The computer system of any of examples 1-4, wherein the vehicle model comprises data indicative of a total weight of the vehicle, a rolling resistance coefficient, a radius of one or more wheels and a target vehicle speed.

Example 6. The computer system of any previous examples, wherein the processing circuitry is configured to determine the control parameter in response to a need for high-precision longitudinal positioning of the vehicle.

Example 7. The computer system of example 6, wherein the processing circuitry is configured to determine the need for high-precision longitudinal positioning of the vehicle from data indicative of a need for a high-precision longitudinal positioning of the vehicle.

Example 8. The computer system of any previous examples 6 to 7, wherein the data is based on any one of a driver request, an automatically detected driving condition and an automatically detected external situation requiring a high-precision longitudinal positioning of the vehicle.

Example 9. The computer system of any previous examples 6 to 8, wherein the data is based on a fleet coordination system request requiring high-precision longitudinal positioning of the vehicle at a given geographical location.

Example 10. The computer system of any previous examples 6 to 9, wherein the processing circuitry is configured to determine a need for high-precision longitudinal positioning of the vehicle along a route based on any one of topography data and vehicle data.

Example 11. The computer system of any previous examples 6 to 10, wherein high-precision longitudinal positioning is a longitudinal positioning of the vehicle in which the vehicle moves in the longitudinal direction of the vehicle by a positional tolerance being within a predefined narrow range compared to a broader range for normal precision.

Example 12. The computer system of any previous examples, wherein the processing circuitry is configured to control longitudinally positioning of the vehicle along the ground surface based on the determined control parameter.

Example 13. The computer system of example 12, wherein the processing circuitry is configured to implement a predictive control schema, wherein the control parameter is adjusted proactively to maintain the desired target acceleration of the vehicle.

Example 14. A vehicle, such as an electric autonomous vehicle, the vehicle comprising the computer system of any of examples 1-13.

Example 15. A computer-implemented method 300 for controlling a vehicle, the method comprising: determining S10, by processing circuitry of a computer system, a target acceleration for the vehicle; determining S20, by the processing circuitry, a ground surface profile for a ground surface that is longitudinally ahead of the vehicle, the ground surface profile being indicative of an aggregated force acting on the vehicle; estimating S30, by the processing circuitry, a rolling resistance for the vehicle using a vehicle model; and determining S40, by the processing circuitry, a control parameter for an electric drive unit of the vehicle to longitudinally position the vehicle along the ground surface, the control command being determined based on the combination of the determined target acceleration, the ground surface profile and the estimated rolling resistance.

Example 16. The method of example 15, wherein the aggregated force is calculated as a combination of forces acting on respective wheel of the vehicle based on localized ground surface characteristics.

Example 17. The method of example 15 or example 16, wherein the control parameter is used in a feedback control profile, the method further comprising:

receiving, by the processing circuitry, data indicative of a deviation between an actual longitudinal position of the vehicle and a desired longitudinal position of the vehicle; and
adjusting the control parameter in response to the deviation to move the vehicle to the desired longitudinal position.

Example 18. The method of any of examples 15 to 17, wherein the control parameter is used in a feedforward control profile, the method further comprising:

anticipating, by the processing circuitry, changes in the aggregated force acting on the vehicle from the ground surface profile; and adjusting the control parameter proactively to maintain the desired target acceleration of the vehicle.

Example 19. A computer program product comprising program code for performing, when executed by the processing circuitry, the method of example 15.

Example 20. A non-transitory computer-readable storage medium comprising instructions, which when executed by the processing circuitry, cause the processing circuitry to perform the method of example 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) for a vehicle (10), wherein the computer system comprises processing circuitry (102) configured to:

   - determine a target acceleration for the vehicle;
   - determine a ground surface profile for a ground surface (230) that is longitudinally ahead of the vehicle, the ground surface profile being indicative of an aggregated force acting on the vehicle;
   - estimate a rolling resistance for the vehicle using a vehicle model; and
   - determine a control parameter for an electric drive unit (20, 40) of the vehicle to longitudinally position the vehicle along the ground surface, wherein the control command is determined based on the combination of the determined target acceleration, the ground surface profile and the estimated rolling resistance.

2. The computer system of claim 1, wherein the aggregated force is calculated as a combination of forces acting on respective wheels of the vehicle based on localized ground surface characteristics.

3. The computer system of claim 1 or claim 2, wherein the ground surface profile is determined using a forward-looking sensor system (70) arranged on the vehicle.

4. The computer system of any of claims 1-3, wherein the ground surface profile is determined from data obtained from any one of another vehicle and a remote-control system.

5. The computer system of any of claims 1-4, wherein the vehicle model comprises data indicative of a total weight of the vehicle, a rolling resistance coefficient, a radius of one or more wheels and a target vehicle speed.

6. The computer system of any previous claims, wherein the processing circuitry is configured to determine the control parameter in response to a need for high-precision longitudinal positioning of the vehicle.

7. The computer system of claim 6, wherein the processing circuitry is configured to determine the need for high-precision longitudinal positioning of the vehicle from data indicative of a need for a high-precision longitudinal positioning of the vehicle.

8. The computer system of any previous claims 6 to 7, wherein the data is based on any one of a driver request, an automatically detected driving condition and an automatically detected external situation requiring a high-precision longitudinal positioning of the vehicle.

9. The computer system of any previous claims 6 to 8, wherein the data is based on a fleet coordination system request requiring high-precision longitudinal positioning of the vehicle at a given geographical location.

10. The computer system of any previous claims 6 to 9, wherein the processing circuitry is configured to determine a need for high-precision longitudinal positioning of the vehicle along a route based on any one of topography data and vehicle data.

11. The computer system of any previous claims 6 to 10, wherein high-precision longitudinal positioning is a longitudinal positioning of the vehicle in which the vehicle moves in the longitudinal direction of the vehicle by a positional tolerance being within a predefined narrow range compared to a broader range for normal precision.

12. The computer system of any previous claims, wherein the processing circuitry is configured to control longitudinally positioning of the vehicle along the ground surface based on the determined control parameter.

13. The computer system of claim 12, wherein the processing circuitry is configured to implement a predictive control schema, wherein the control parameter is adjusted proactively to maintain the desired target acceleration of the vehicle.

14. A vehicle, such as an electric autonomous vehicle, the vehicle comprising the computer system of any of claims 1-13.

15. A computer-implemented method (300) for controlling a vehicle, the method comprising: determining (S10), by processing circuitry (102) of a computer system (100), a target acceleration for the vehicle; determining (S20), by the processing circuitry, a ground surface profile for a ground surface that is longitudinally ahead of the vehicle, the ground surface profile being indicative of an aggregated force acting on the vehicle; estimating (S30), by the processing circuitry, a rolling resistance for the vehicle using a vehicle model; and determining (S40), by the processing circuitry, a control parameter for an electric drive unit of the vehicle to longitudinally position the vehicle along the ground surface, the control command being determined based on the combination of the determined target acceleration, the ground surface profile and the estimated rolling resistance.

16. A computer program product comprising program code for performing, when executed by the processing circuitry, the method of claim 15.

17. A non-transitory computer-readable storage medium comprising instructions, which when executed by the processing circuitry, cause the processing circuitry to perform the method of claim 15.

Fig. 1

Fig. 2

*Fig. 3*

*Fig. 4*

*Fig. 5*

Fig. 6

Fig. 7

Europäisches
Patentamt

European
Patent Office

Office européen
des brevets

# EUROPEAN SEARCH REPORT

**Application Number**

EP 24 22 2292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/379732 A1 (NAKAMURA KATSUNORI [JP] ET AL) 1 December 2022 (2022-12-01) | 1,4-17 | INV.<br>B60L15/20 |
| Y | * paragraph [0023]; figure 1 *<br>* paragraph [0030] - paragraph [0049]; figure 2 *<br>* paragraph [0056] - paragraph [0069]; figure 5 *<br>* paragraph [0110]; figure 8 *<br>----- | 2,3 | B60L50/60<br>B60L53/37<br>B60W40/13 |
| X | JP 2021 035274 A (DENSO TEN LTD) 1 March 2021 (2021-03-01)<br>* paragraph [0034] - paragraph [0062]; figure 2 *<br>----- | 1,5-17 | |
| Y | US 2002/013652 A1 (YASUI YOSHIYUKI [JP] ET AL) 31 January 2002 (2002-01-31)<br>* paragraph [0019] *<br>----- | 2 | |
| Y | KR 2019 0072733 A (KOREA ELECTRONICS TECHNOLOGY [KR]) 26 June 2019 (2019-06-26)<br>* paragraph [0031] *<br>----- | 3 | TECHNICAL FIELDS SEARCHED (IPC)<br><br>B60L<br>B60W |

The present search report has been drawn up for all claims

| Place of search | Date of completion of the search | Examiner |
|---|---|---|
| The Hague | 10 June 2025 | Benedetti, Gabriele |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 22 2292

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | | | Publication date | Patent family member(s) | | Publication date |
|---|---|---|---|---|---|---|
| US 2022379732 | A1 | | 01-12-2022 | CN 114599544 A | | 07-06-2022 |
| | | | | EP 4052951 A1 | | 07-09-2022 |
| | | | | JP 7283565 B2 | | 30-05-2023 |
| | | | | JP WO2021084574 A1 | | 06-05-2021 |
| | | | | US 2022379732 A1 | | 01-12-2022 |
| | | | | WO 2021084574 A1 | | 06-05-2021 |
| JP 2021035274 | A | | 01-03-2021 | NONE | | |
| US 2002013652 | A1 | | 31-01-2002 | DE 10116356 A1 | | 20-12-2001 |
| | | | | US 2002013652 A1 | | 31-01-2002 |
| KR 20190072733 | A | | 26-06-2019 | NONE | | |

EPO FORM P0459

For more details about this annex : see Official Journal of the European Patent Office, No. 12/82